# FASCICULE DE BREVET EUROPEEN

(11) **EP 0 500 461 B1**
(45) Date de publication et mention de la délivrance du brevet: **23.07.1997**
(21) Numéro de dépôt: 92400440.1
(22) Date de dépôt: 19.02.1992
(51) Int. Cl.: G01D 5/18, G01D 5/16

(54) **Dispositif de détection de l'état logique d'un composant dont l'impédance varie suivant cet état**
Anordnung für die Detektion des logischen Zustandes eines Bauteiles, dessen Impedanz sich in Abhängigkeit von seinen Zustand ändert
Device for the detection of the logical state of a component, whose impedance varies according to it's state

(30) Priorité: 21.02.1991 FR 9102090
(43) Date de publication de la demande: 26.08.1992
(73) Titulaire: SGS-THOMSON MICROELECTRONICS S.A., 94253 Gentilly Cédex (FR)
(72) Inventeur: Lisart, Mathieu, F-13100 Aix en Provence (FR); Fournel, Richard, F-13530 Trets (FR)
(74) Mandataire: Dubois-Chabert, Guy

(56) Documents cités:
- DE-A- 3 634 052
- FR-A- 1 465 485
- US-A- 4 488 065
- PATENT ABSTRACTS OF JAPAN vol. 014, no. 214 (P-1044)(4157) 7 Mai 1990 & JP-A-02 047 559 (SHARP CORP) 16 fev. 1990

## Description

L'invention concerne un dispositif de détection de l'état logique d'un composant dont l'impédance varie suivant cet état. Elle s'applique notamment à la détection de l'état logique de tout composant pour lequel cette détection est basée sur la mesure d'un courant.

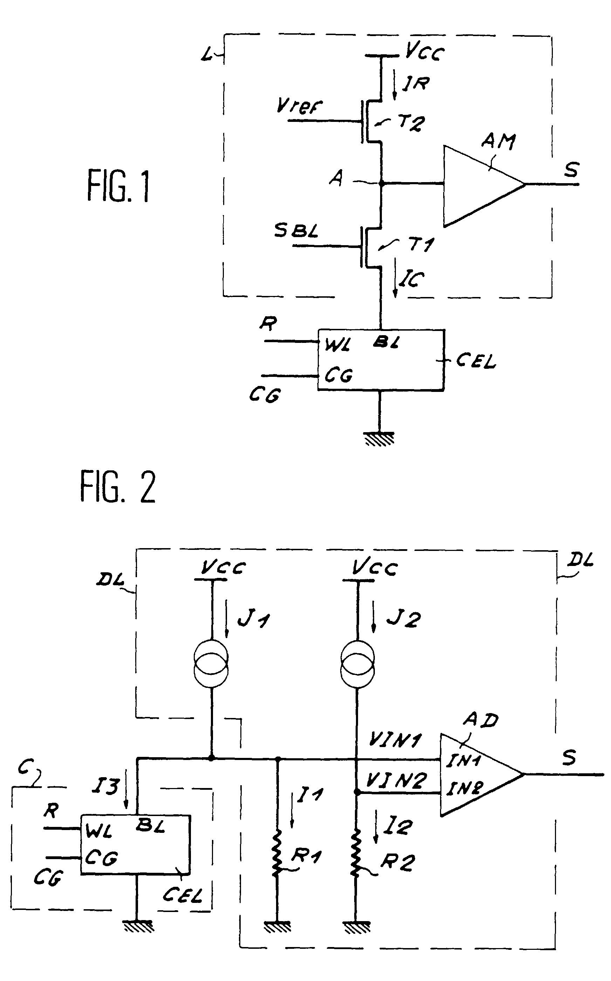

Elle s'applique particulièrement à la lecture de cellules mémoire qui pour la pluspart des cas ne présentent pas la même impédance selon qu'elles sont dans un état dit programmé ou dans l'état complémentaire correspondant à un effacement. C'est le cas notamment des cellules mémoire de mémoires PROM, EPROM, ROM, EEPROM. Un exemple de dispositif L de détection de l'état logique d'un composant conforme à l'art antérieur est représenté sur la figure 1.

Comme cela va être décrit de façon détaillée à partir de l'application d'un tel dispositif à la lecture d'une cellule mémoire, l'inconvénient majeur qu'il présente est de laisser apparaître une consommation de courant variable et donc mesurable de l'extérieur du circuit dans lequel ce dispositif est intégré. Ainsi, une simple mesure de courant de l'extérieur du circuit suffit pour connaître l'état logique du composant interne mesuré.

Pour détecter l'état logique d'une cellule mémoire CEL, la borne BL correspondant à la borne reliée à la ligne de bit dans une mémoire est reliée à un amplificateur AM par l'intermédiaire d'un transistor T1. Un deuxième transistor T2 est prévu de sorte que le noeud A qui est le point commun entre une électrode du transistor T1 et une électrode du transistor T2 soit relié à l'entrée de l'amplificateur AM.

La grille du transistor T2 reçoit une tension de référence Vréf, et la deuxième électrode de ce transistor est reliée à une tension d'alimentation Vcc. Le transistor T2 polarisé par La tension Vréf génère ainsi un courant IR.

La sélection de La cellule se fait par application d'une tension SBL désirée sur la grille du transistor T1. Lorsque cette sélection est réalisée, on peut procéder à une lecture en appliquant une tension de lecture sur l'entrée WL de la cellule et une tension CG sur L'entrée grille de commande de la cellule.

Selon que la cellule se trouve dans un état logique correspondant à une programmation ou à un effacement, un courant IC va transiter au travers de la cellule si bien que le potentiel du noeud A chute. D'autre part, si la cellule a une forte impédance, le courant IC est sensiblement nul, le noeud A est proche de V_{cc}.

Si la cellule a une faible impédance, le courant IC est positif, le noeud A chute.

L'amplificateur AM peut donc détecter s'il y a une chute de tension ou non, en fonction de quoi, l'état logique de la cellule est détecté.

Or, la variation de courant peut être mesurée sur les bornes extérieures de la mémoire qui contient les cellules lues de cette façon.

A titre d'exemple, le courant est d'environ 50µA lors d'une lecture de cellule pour laquelle l'état logique programmé correspond à une tension VT=-2,5V et est inférieur à 1µA lorsque la cellule est effacée. La variation de courant constatée est de l'ordre de 50µA. Une telle variation est supérieure au bruit d'alimentation et est donc aisément décelable à l'aide d'un pico-ampèremètre.

Par ailleurs, un circuit permettant de mesurer la résistance d'une résistance de capteur est décrit dans le document DE-A-3 634 052 ; selon ce document, un premier raccordement de cette résistance de capteur est relié à une source de courant et susceptible d'être relié, par un premier conducteur, à un amplificateur d'instrument et dont le deuxième raccordement est susceptible d'être couplé, par un deuxième conducteur, à l'amplificateur d'instrument et couplée à un troisième conducteur.

La possibilité de connaître l'état logique des cellules mémoire depuis l'extérieur de la mémoire par mesure des variations des courants s'avère être un grave inconvénient lorsque la mémoire contient des informations qui doivent rester secrètes.

La présente invention a pour but de remédier à cet inconvénient. L'invention telle qu'elle est caractérisée dans les revendications, résout le problème consistant à créer un dispositif de détection de l'état logique d'un composant avec lequel les variations de courant, ne sont pas sensibles de l'extérieur. En effet, conformément à l'invention, les faibles variations de l'alimentation qui peuvent se produire lors d'une détection sont suffisamment faibles pour être noyées dans le bruit de l'alimentation.

L'invention a plus particulièrement pour objet un dispositif de détection de l'état logique d'un composant dont l'impédance varie suivant cet état, comportant des moyens de génération d'un courant ainsi que des moyens de génération d'une tension de mesure, caractérisé en ce que :
. les moyens de génération d'un courant comprennent une source de courant reliée aux moyens de génération de la tension de mesure ;
. les moyens de génération de la tension de mesure comportent une première résistance connectée en parallèle sur le composant et dont la valeur est fixée de manière à obtenir une consommation constante du courant quel que soit l'état logique du composant ; et en ce qu'il comporte des moyens de mesure de ladite tension de mesure.

Selon une autre caractéristique de l'invention, les moyens de mesure comprennent :
- des moyens de génération d'une tension de référence,
- des moyens de comparaison de la tension à mesurer et de référence.

Selon une autre caractéristique de l'invention, les moyens de génération de la tension de référence comprennent une source de courant reliée à une deuxième résistance.

Selon un mode de réalisation préférentiel, les moyens de comparaison comprennent un amplificateur différentiel dont une entrée reçoit la tension aux bornes de la première résistance, dont l'autre entrée reçoit la tension aux bornes de la deuxième résistance et dont la sortie délivre un signal basculant d'un état logique à l'état logique complémentaire selon l'état logique du composant à mesurer.

De préférence, les sources de courant sont des sources de courant à courant constant.

Selon une autre caractéristique de l'invention, le composant est une cellule mémoire dont l'impédance varie selon que son état logique corresponde à une programmation ou à un effacement.

Selon un autre aspect de l'invention, le dispositif est relié à l'ensemble des cellule d'une mémoire, chaque cellule est sélectionnée successivement de manière à lire les cellules les unes après les autres.

D'autres caractéristiques et avantages de l'invention apparaîtront à la lecture de la description qui va suivre et qui est faite en regard des figures sur lesquelles :
- la figure 1 représente le schéma d'un dispositif de lecture selon l'art antérieur,
- la figure 2 représente le schéma d'un dispositif de lecture DL conforme à l'invention,
- la figure 3 représente le schéma détaillant les connexions du dispositif DL à une cellule mémoire sélectionnée sur une colonne et une rangée d'une mémoire,
- la figure 4 représente le schéma détaillant les connexions du dispositif à un ensemble de cellules d'une mémoire sélectionnée pour la lecture.

La figure 1 conforme à l'art antérieur a déjà été décrite et ne sera pas plus détaillée.

La figure 2 permet d'illustrer un dispositif de détection DL selon l'invention. A titre d'exemple, ce dispositif est appliqué à la lecture d'une cellule mémoire. Mais bien entendu, cet exemple est donné à titre illustratif, la cellule pouvant être remplacée par tout composant C ayant une impédance variant selon l'état logique dans lequel il se trouve.

Le dispositif comprend une source de courant J1 reliée à une résistance R1, l'ensemble étant connecté aux bornes d'une tension d'alimentation Vcc.

La résistance R1 est connectée en parallèle sur la cellule CEL à lire. La source de courant J1 et la résistance R1 forment des moyens permettant de générer un courant et une tension de mesure. Cet ensemble assure une consommation constante de courant quelque soit l'état logique de la cellule tout en permettant une détection de cet état.

Lorsque la cellule est lue, et qu'elle se met à conduire, cette conduction correspond à un état logique donné soit de programmation, soit d'effacement selon la convention qui a été faite à la programmation. La cellule présente alors une faible impédance et un courant I3 circule de sorte que I3#J1.

Lorsque la cellule ne conduit pas, son impédance est forte, la résistance R1 est choisie de manière à ce que l'on ait alors un courant I1#J1.

Des moyens de mesure de la tension aux bornes de la résistance R1 assurant la détection de l'état logique de la cellule. Ces moyens peuvent être constitués d'un amplificateur. De façon préférentielle, ces moyens comportent un générateur de tension de référence et des moyens de comparaison. Le générateur de tension de référence comprend une source de courant J2 reliée à une résistance R2 dans laquelle circule un courant I2 tel que J2=I2.

Les moyens de comparaison sont constitués d'un amplificateur différentiel AD qui reçoit sur une entrée IN1 la tension aux bornes de la résistance R1 et sur l'autre entrée IN2 la tension aux bornes de la résistance R2.

Lorsque l'on réalise une lecture de la cellule et que la cellule a un état logique tel qu'un courant I3 est absorbé, on applique à l'entrée IN1 de l'amplificateur AD une tension VIN1 inférieure à VIN2.

Pour l'état logique complémentaire, un courant I1 circule dans la résistance R1. On applique alors à l'entrée IN1 une tension VIN1 supérieure ou égale à VIN2.

La valeur de R1 est fixée de manière à obtenir une consommation constante quelque soit l'état logique de la cellule, et des valeurs de tension VIN1 correspondant à ces deux états présentant un écart suffisant.

L'amplificateur différentiel délivre un signal S dont l'état logique sera haut ou bas selon que VIN1 sera supérieure (ou égale) à VIN2 ou inférieure à VIN2.

L'état logique du signal S permet de connaître l'état de la cellule lue.

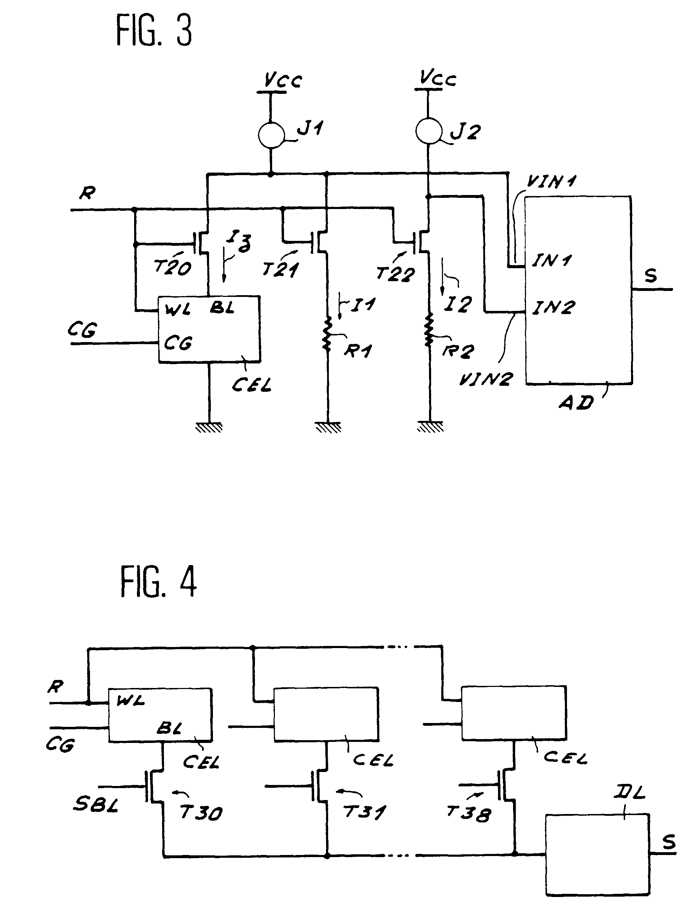

La figure 3 illustre les connexions d'une cellule mémoire sélectionnée parmi les cellules appartenant à une colonne de la mémoire, et les cellules appartenant à une rangée.

La sélection de la cellule CEL en lecture se fait de manière classique par application d'une tension de lecture R sur la ligne de mot (WORD LINE (WL) en terminologie anglosaxonne).

L'application de cette tension sur les entrées WL permet de sélectionner la rangée dans laquelle se trouve la cellule. On procède également à l'application de cette tension de lecture R sur la grille du transistor T20 de sélection de la cellule sur la ligne de bit (Bit Line) à laquelle la cellule appartient.

Une électrode de ce transistor T20 est reliée à l'entrée BL de la cellule et l'autre à la source de courant J1.

Une tension CG appropriée est appliquée à l'entrée de la grille de commande de la cellule CEL.

Un transistor T21 est prévu pour relier la source J1 à la résistance R1, cette liaison étant réalisée lorsqu'une tension est appliquée sur la grille du transistor. Un transistor T22 est prévu pour relier la source J2 à la résistance R2 cette liaison étant également réalisée lorsqu'une tension est appliquée sur la grille du transistor. Ces tensions peuvent être la tension de lecture R.

La figure 4 représente un dispositif DL relié à un ensemble de cellules mémoire sélectionnée pour une lecture dans une mémoire non représentée.

La tension de lecture R est appliquée aux entrées WL des cellules appartenant à cet ensemble.

Par sélection successive de chacune de ces cellules, le dispositif permet de lire le mot binaire constitué pour les états logiques de toutes les cellules de l'ensemble.

Des transistors T30, T31, ..., T37 sont commandés successivement pour procéder à cette lecture.

Ainsi, le dispositif conforme à l'invention peut être prévu pour un nombre désiré de cellules mémoire devant être lues pendant une même séquence de lecture.

On peut relier le dispositif à plusieurs rangées d'une mémoire et lire ces rangées les unes après les autres.

Cependant, on utilisera n dispositifs DL pour lire simultanément l'état de n composants.

## Revendications

1. Dispositif de détection de l'état logique d'un composant dont l'impédance varie suivant cet état, comportant des moyens de génération d'un courant (J1, R1), ainsi que des moyens de génération d'une tension de mesure, caractérisé en ce que :
. les moyens de génération d'un courant comprennent une source de courant (J1) reliée aux moyens de génération de la tension de mesure ;
. les moyens de génération de la tension de mesure comportent une première résistance (R1) connectée en parallèle sur le composant (C) et dont la valeur est fixée de manière à obtenir une consommation constante du courant quel que soit l'état logique du composant ;
et en ce qu'il comporte des moyens de mesure (AD) de ladite tension de mesure.

2. Dispositif selon la revendication 1, caractérisé en ce que les moyens de mesure comprennent des moyens de génération d'une tension de référence (J2, R2) et des moyens de comparaison (AD) des tensions de référence et à mesurer.

3. Dispositif selon l'une quelconque des revendications précédentes, caractérisé en ce que les moyens de génération (J2, R2) de tension de référence comprennent une source de courant (J2) reliée à une deuxième résistance (R2).

4. Dispositif selon la revendication 2, caractérisé en ce que les moyens de comparaison (AD) comprennent un amplificateur différentiel (AD) dont une entrée reçoit la tension aux bornes de la première résistance (R1), dont l'autre entrée reçoit la tension aux bornes de la deuxième résistance (R2) et dont la sortie délivre un signal basculant d'un état logique à l'état logique complémentaire selon l'état logique du composant (C).

5. Dispositif selon l'une quelconque des revendications précédentes, caractérisé en ce que les sources de courant (J1, J2) sont des sources à courant constant.

6. Dispositif selon l'une quelconque des revendications précédentes, caractérisé en ce que le composant est une cellule mémoire (CEL) dont l'impédance varie selon que son état logique corresponde à une programmation ou à un effacement.

7. Dispositif selon l'une quelconque des revendications précédentes, caractérisé en ce que ce dispositif (DL) est relié à l'ensemble des cellules d'une mémoire (CEL), chaque cellule est sélectionnée successivement de manière à lire ces cellules les unes après les autres.

## Patentansprüche

1. Anordnung für die Detektion des logischen Zustands eines Bauteiles, dessen Impedanz sich in Abhängigkeit von seinem Zustand ändert, Einrichtungen zur Erzeugung eines Stroms (J1, R1) sowie Einrichtungen zur Erzeugung einer Meßspannung umfassend, **dadurch gekennzeichnet:**
. daß die Stromerzeugungseinrichtungen eine Stromquelle (J1) umfassen, verbunden mit den Meßspannungserzeugungseinrichtungen;
. daß die Meßspannungserzeugungseinrichtungen einen ersten Widerstand (Rl) umfassen, der parallelgeschaltet ist zum Bauteil (C) und dessen Wert so festgelegt ist, daß man einen konstanten Stromverbrauch erzielt, unabhängig vom logischen Zustand des Bauteils;
und dadurch, daß sie Meßeinrichtungen der genannten Meßspannung umfaßt.

2. Anordnung nach Anspruch 1, dadurch gekennzeichnet, daß die Meßeinrichtungen Einrichtungen zur Erzeugung einer Bezugsspannung umfassen (J2, R2) und Vergleichseinrichtungen (AD) der Bezugsspannung und der zu messenden Spannung.

3. Anordnung nach einem der vorangehenden Ansprüche, dadurch gekennzeichnet, daß die Bezugsspannungserzeugungseinrichtungen (J2, R2) eine mit einem zweiten Widerstand (R2) verbundene Stromquelle (J2) umfaßt.

4. Anordnung nach Anspruch 2, dadurch gekennzeichnet, daß die Vergleichseinrichtungen (AD) einen Differentialverstärker (AD) umfassen, dessen einer Eingang die Spannung an den Anschlüssen des ersten Widerstands (R1) bezieht, dessen anderer Eingang die Spannung an den Anschlüssen des zweiten Widerstands (R2) bezieht und dessen Ausgang ein Signal liefert, das von einem logischen Zustand in den komplementären logischen Zustand kippt, entsprechend dem logischen Zustand des Bauteils (C).

5. Anordnung nach einem der vorangehenden Ansprüche, dadurch gekennzeichnet, daß die Stromquellen (J1, J2) Konstantstromquellen sind.

6. Anordnung nach einem der vorangehenden Ansprüche, dadurch gekennzeichnet, daß das Bauteil eine Speicherzelle (CEL) ist, deren Impedanz variiert, je nach dem, ob ihr logischer Zustand einer Pogrammierung oder einer Löschung entspricht.

7. Anordnung nach einem der vorangehenden Ansprüche, dadurch gekennzeichnet, daß die Anordnung (DL) mit der Gesamtheit der Zellen eines Speichers (CEL) verbunden ist, wobei jede Zelle sukzessiv angesteuert wird, um diese Zellen nacheinander zu lesen.

## Claims

1. Device for the detection of the logic state of a component, whose impedance varies according to said state and incorporating means (J1, R1) for generating a current, as well as means for generating a measurement voltage, characterized in that the means for generating a current comprise a current source (J1) connected to the means for generating the measurement voltage and the means for generating the measurement voltage comprise a first resistor (R1) connected in parallel to the component (C) and whose value is fixed so as to obtain a constant consumption of the current no matter what the logic state of the component and in that it has means (AD) for measuring the measurement voltage.

2. Device according to claim 1, characterized in that the measuring means comprise means (J2, R2) for generating a reference voltage and means (AD) for comparing the reference voltage and the voltage to be measured.

3. Device according to either of the preceding claims, characterized in that the reference voltage generating means (J2, R2) comprise a current source (J2) connected to a second resistor (R2).

4. Device according to claim 2, characterized in that the comparison means (AD) comprise a differential amplifier (AD), whereof one input receives the voltage at the terminals of the first resistor (R1) and whereof the other input receives the voltage at the terminals of the second resistor (R2) and whereof the output supplies a signal switching from one logic state to the complimentary logic state as a function of the logic state of the component (C).

5. Device according to any one of the preceding claims, characterized in that the current sources (J1, J2) are constant current sources.

6. Device according to any one of the preceding claims, characterized in that the component is a memory cell (CEL), whose impedance varies as a function of whether its logic state corresponds to a programming or an erasing.

7. Device according to any one of the preceding claims, characterized in that the device (DL) is connected to all the cells of a memory (CEL), each cell being selected successively so as to successively read the cells.
